Europäisches Patentamt

European Patent Office

Office européen des brevets

(1) Veröffentlichungsnummer: **0 287 006**
**A1**

## EUROPÄISCHE PATENTANMELDUNG

(21) Anmeldenummer: **88105707.9**

(22) Anmeldetag: **11.04.88**

(51) Int. Cl.⁴ **A01C 17/00**

(30) Priorität: **11.04.87 DE 8705460 U**

(43) Veröffentlichungstag der Anmeldung:
**19.10.88 Patentblatt 88/42**

(84) Benannte Vertragsstaaten:
**AT BE DE ES FR GB IT NL**

(71) Anmelder: **ACCORD Landmaschinen Heinrich Weiste & Co. GmbH**
**Coesterweg 42**
**D-4770 Soest(DE)**

(72) Erfinder: **Weiste, Helmut**
**Siegmund-Schultze-Weg 12**
**D-4770 Soest(DE)**

(74) Vertreter: **Habbel, Hans-Georg, Dipl.-Ing.**
**Postfach 3429 Am Kanonengraben 11**
**D-4400 Münster(DE)**

(54) Düngerstreuer.

(57) Die Erfindung betrifft einen Düngerstreuer mit trichterförmigen, mit Auslauföffnungen versehenen Vorratsbehältern (1, 2), in denen je ein Rührwerk angeordnet ist und einer unterhalb jedes Vorratsbehälters angeordneten Streuscheibe (4, 5), wobei die Streuscheiben (4, 5) über ein Mittengetriebe (6) und zwei endseitig der an das Mittengetriebe (6) anschließenden Antriebswellen vorgesehene Winkelgetriebe (18) antreibbar sind und bei welchem zwischen dem Mittengetriebe (6) und jedem Winkelgetriebe (7, 8) eine Kupplung (9, 10) angeordnet ist

Fig. 2

## Düngerstreuer

Die Neuerung bezieht sich auf einen Düngerstreuer gemäß dem Oberbegriff des Hauptanspruches.

Düngerstreuer der gattungsbildenden Art sind bekannt und werden als Zweischeibendüngerstreuer mit großer Streubreite eingesetzt. Hierbei ist es notwendig, daß beim Streuen am Feldrand oder bei sogenannten Reststücken die Dosierschieber für eine Streuhälfte geschlossen werden. Während dieser Zeit streut nur eine Streuscheibe, während die andere Streuscheibe mit dem Rührwerk weiterläuft. Dabei zermalt das schnellaufende Rührwerk den Dünger, der nicht mehr durch die Dosieröffnung austreten kann und es bilden sich nach kurzer Zeit teilweise eine feste Wand im Bereich der Dosieröffnung und es erfolgt ein unerwünschtes Zerkleinern des Düngers. Wenn der Dosierschieber dann wieder geöffnet wird, ist die Öffnung verstopft und es muß häufig eine Tankhälfte manuell wieder freigelegt werden.

Es sind auch Lösungen bekannt, mit denen das Rührwerk mit einer niedrigeren Zahl angetrieben werden kann als der Schleuderteller. Das vermindert zwar das Problem des Zusetzens, löst jedoch dieses Problem nicht. Auch sind Lösungen vorgeschlagen, bei denen ein gesondertes, z.B. pneumatisch betriebenes Rührwerk eingesetzt wird. Pneumatische Rührwerke allein sind aber nicht ausreichend, wenn Klumpen in dem Dünger im Vorratsbehälter zerkleinert werden sollen. Aus diesem Grunde sind in den meisten Schleuderstreuern Rührfinger und Rührwerke gebräuchlich, die direkt mit der Welle des Schleudertellers verbunden sind.

Der Neuerung liegt die Aufgabe zugrunde, ohne großen zusätzlichen Aufwand das Rührwerk des einen oder anderen Vorratsbehälters abzuschalten, wenn der Dosierschieber einseitig geschlossen wird, so daß dann das Streuen am Feldrand oder z.B. bei Reststücken möglich ist.

Diese der Neuerung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, schlägt die Neuerung vor, daß in die Verbindung zwischen dem Mittengetriebe und dem Winkelgetriebe eine Kupplung eingebaut wird, die - wenn der Dosierschieber geschlossen wird - die Verbindung zwischen dem Mittengetriebe und dem Rührwerk unterbricht.

Hierbei kann so vorgegangen werden, daß diese Kupplung elektrisch oder hydraulisch beispielsweise bei Betätigen des Dosierschiebers in Tätigkeit gesetzt wird.

Da das einseitige Streuen und damit das erforderliche einseitige Schließen der Dosierschieber nicht häufig vorkommt, ist es wünschenswert eine preiswertere und unempfindlichere Lösung vorzuschlagen. Gemäß der Neuerung wird daher vorgesehen, daß über eine Schiebemuffe eine Kupplung erstellt wird, die von Hand gelöst werden kann.

Um die Schaufeln beider Streuscheiben in einer bestimmten Synchronlage zueinander zu betreiben, kann weiterhin gemäß der Neuerung vorgesehen sein, daß eine Verdrehsicherung im Bereich der Kupplung vorgesehen ist, die bewirkt, daß die Kupplung nur in einer Stellung eingekuppelt werden kann, wenn beide Streuscheiben synchron gestellt sind. Dies kann in einfachster Weise durch entsprechende Abfräsungen an den Kupplungsteilen erreicht werden oder durch nur einseitig eingesetzte Mitnehmerstifte, so daß nur bei Einsetzen der Mitnehmerstifte die Kupplung schließbar ist, wobei dann gleichzeitig die Streuscheiben synchron stehen.

Ein Ausführungsbeispiel der Neuerung wird nachfolgend anhand der Zeichnungen beschrieben. Die Zeichnungen zeigen dabei in

Fig. 1 schematisch zur Verdeutlichung des Anmeldungsgegenstandes eine Ansicht auf den unteren Teil von zwei Vorratsbehältern mit den darunter angeordneten Streuscheiben und den hierfür erforderlichen Antriebsmitteln und in

Fig. 2 eine abgeänderte Ausführungsform gemäß Fig. 1.

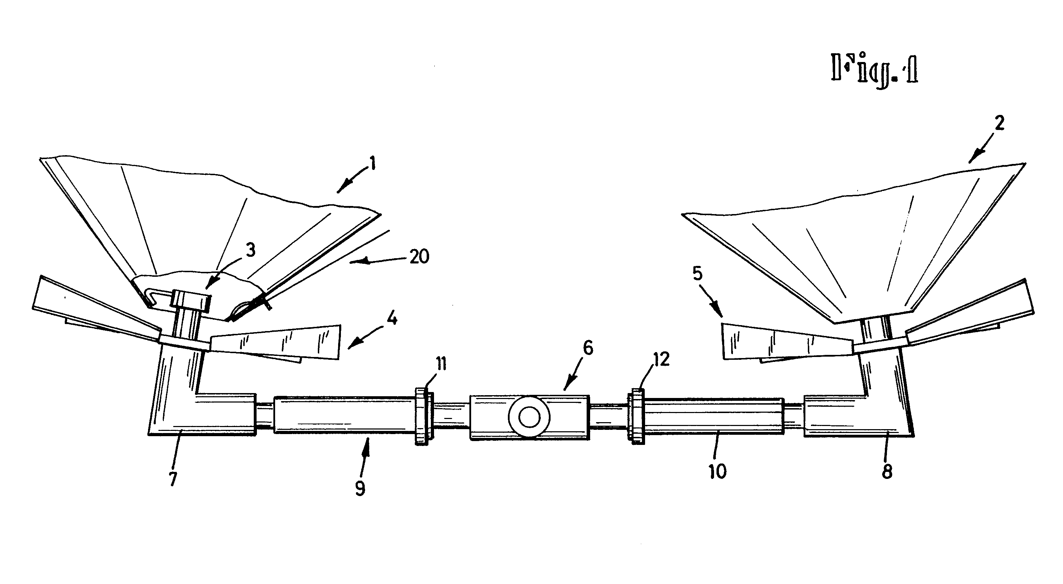

In den Zeichnungen sind mit 1 und 2 zwei Vorratsbehälter bezeichnet unter denen sich je eine Streuscheibe 4 bzw. 5 befindet, wobei in den Vorratsbehältern 1 und 2 Rührwerke 3 angeordnet sind, wobei in Fig. 1 das in dem linken Vorratsbehälter angeord nete Rührwerk erkennbar ist.

Bei 20 ist ein Dosierschieber erkennbar, der dann, wenn nur ein einseitiges Streuen erfolgen soll, geschlossen werden kann.

Das innerhalb der Vorratsbehälter 1 und 2 angeordnete Rührwerk wird über ein Mittengetriebe 6 angetrieben, an das sich zwei Antriebswellen 9 und 10 anschließen, die anderenendes an Winkelgetrieben 7 und 8 anschließen, wobei über diese Antriebseinheit gleichzeitig der Antrieb der Streuscheiben 4 und 5 erfolgt.

Bei dem in Fig. 1 dargestellten Ausführungsbeispiel sind zwischen Mittengetriebe 6 und den beiden Winkelgetrieben 7 und 8 je eine Kupplung 11 und 12 eingeschaltet, die beispielsweise hydraulisch oder elektrisch betätigt werden kann.

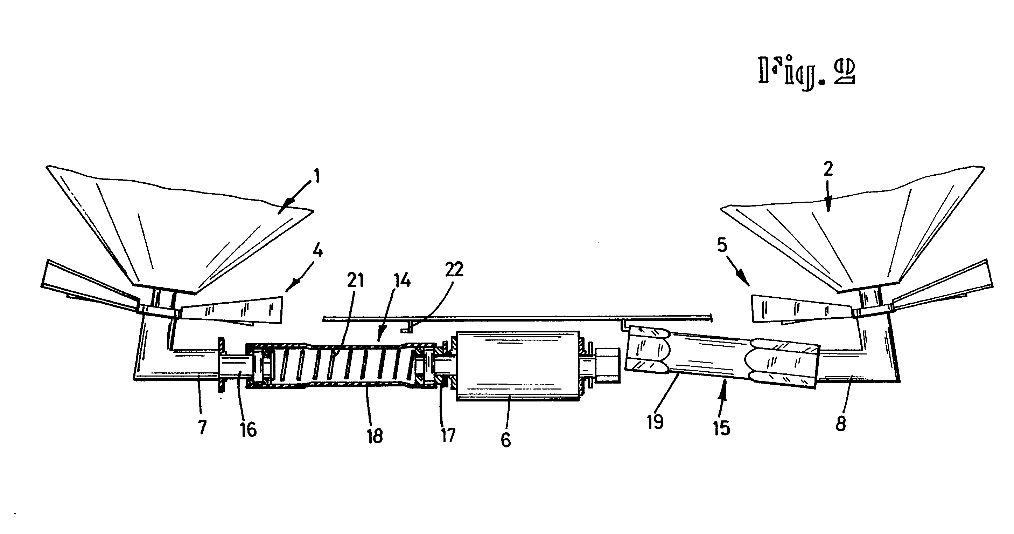

Bei dem in Fig. 2 dargestellten Ausführungsbeispiel wird die eigentliche Kupplung 14 bzw. 15 durch je eine Schiebemuffe 18, 19 gebildet. Die Wellenenden 16 und 17 können dabei polygonal ausgebildet sein, so daß dadurch ein Mitnehmen der Schiebemuffe 18 erfolgt. Die Verschiebung der Schiebemuffe gegen die Wirkung einer Rückstellfeder 21 erfolgt dabei bei dem dargestellten Ausführungsbeispiel nach rechts und dann kann das linke freie Ende der Schiebemuffe in einen an dem Düngerstreuer angeordneten Haken 22 eingehängt werden, so daß damit ein sicheres Haltern der Schiebemuffen 18 bzw. 19 möglich ist, ohne daß befürchtet werden muß, daß diese verlorengehen können.

Aus der Zeichnung nicht erkennbar, aber für einen Fachmann verständlich, ist die Möglichkeit, die Kupplungen 11 und 12 bzw. 14 und 15 so zu gestalten, daß eine Verdrehsicherung erreicht wird, d.h. daß die Kupplung nur dann eingerastet werden kann, wenn die beiden Streuscheiben 4 und 5 mit ihren Mitnehmern synchron stehen. Dies ist für viele Anwendungsfälle von Bedeutung.

Durch die in Fig. 2 dargestellte Ausführungsform wird weiterhin erreicht, daß sich der Wellenstumpf des Mittengetriebes 6 bei ausgekuppelter Kupplung 15 bzw. 14 frei drehen kann.

## Ansprüche

1. Düngerstreuer mit trichterförmigen, mit Auslauföffnungen versehenen Vorratsbehältern, in denen je ein Rührwerk angeordnet ist und einer unterhalb jedes Vorratsbehälters angeordneten Streuscheibe, wobei die Streuscheiben über ein Mittengetriebe und zwei endseitig der an das Mittengetriebe anschließenden Antriebswellen vorgesehene Winkelgetriebe antreibbar sind, dadurch gekennzeichnet, daß zwischen dem Mittengetriebe (6) und jedem Winkelgetriebe (7, 8) eine Kupplung (11, 12; 14, 15) angeordnet ist.

2. Düngerstreuer nach Anspruch 1, dadurch gekennzeichnet, daß die Kupplung (11, 12) mit einem Hydraulikantrieb verbunden ist.

3. Düngerstreuer nach Anspruch 1, dadurch gekennzeichnet, daß die Kupplung (11, 12) mit einem Elektroantrieb verbunden ist.

4. Düngerstreuer nach Anspruch 1, dadurch gekennzeichnet, daß die Kupplung (14, 15) handbetätigt ist.

5. Düngerstreuer nach Anspruch 4, gekennzeichnet durch je eine Schiebemuffe (18, 19) als Kupplung (14, 15), die formschlüssig an beiden Wellenenden (16, 17) anschließt.

6. Düngerstreuer nach einem oder mehreren der vorhergehenden Ansprüche, insbesondere Anspruch 4 und 5, dadurch gekennzeichnet, daß der formschlüssige Anschluß an den beiden Wellenenden (16, 17) durch eine polygonale Ausbildung der Schiebemuffe (18, 19) und der zusammenwirkenden Wellenenden (16, 17) gebildet ist.

7. Düngerstreuer nach einem oder mehreren der vorhergehenden Ansprüche, insbesondere Anspruch 4 und 5, dadurch gekennzeichnet, daß der Formschluß durch zwischen die Enden der Schiebemuffe (18, 19) und die Wellenenden (16, 17) eingesetzte Mitnehmerstifte erfolgt.

8. Düngerstreuer nach einem oder mehreren der vorhergehenden Ansprüche, dadurch gekennzeichnet, daß die Kupplungseinrichtung mit einer Verdrehsicherung ausgerüstet ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 391 691 (SEVERIN ET LEFEVRE) * Seite 2, Zeilen 19-52; Abbildungen 1,2 * | 1,4,5 | A 01 C 17/00 |
| | --- | | |
| Y | FR-A-1 208 495 (VAN DER LELY) * Seite 2, linke Spalte, Absatz 3; Abbildungen 3,8; Seite 2, rechte Spalte, Absätze 1,2 * | 1 | |
| A | | 4 | |
| | --- | | |
| Y | EP-A-0 138 127 (NIEMEYER) * Seite 4, Zeilen 11-30; Abbildungen 1,2 * | 1 | |
| A | | 8 | |
| | ----- | | RECHERCHIERTE SACHGEBIETE (Int. Cl.4) |
| | | | A 01 C |

Der vorliegende Recherchenbericht wurde für alle Patentansprüche erstellt

| Recherchenort | Abschlußdatum der Recherche | Prüfer |
|---|---|---|
| DEN HAAG | 07-07-1988 | VERMANDER R.H. |